# EUROPEAN PATENT SPECIFICATION

(11) **EP 3 633 956 B1**
(45) Date of publication and mention of the grant of the patent: **10.07.2024**
(21) Application number: 18805298.9
(22) Date of filing: 25.05.2018
(51) Int. Cl.: H04L 65/40, H04W 80/02, H04W 80/04, H04W 16/10, H04W 16/12, G06F 9/455, G06F 9/50

(54) **WIRELESS NETWORK FUNCTION VIRTUALIZATION METHOD AND DEVICE**
VERFAHREN UND VORRICHTUNG ZUR VIRTUALISIERUNG EINER DRAHTLOSNETZWERKFUNKTION
PROCÉDÉ ET DISPOSITIF DE VIRTUALISATION DE FONCTION DE RÉSEAU SANS FIL

(30) Priority: 26.05.2017 CN 201710395408
(43) Date of publication of application: 08.04.2020
(73) Proprietor: ZTE Corporation, Shenzhen, Guangdong 518057 (CN)
(72) Inventor: YANG, Liudi, Shenzhen Guangdong 518057 (CN); JIANG, Hongbo, Shenzhen Guangdong 518057 (CN); WU, Feng, Shenzhen Guangdong 518057 (CN)
(74) Representative: Ipsilon
(86) International application number: PCT/CN2018/088446
(87) International publication number: WO 2018/214965

(56) References cited:
- WO-A1-2015/187965
- WO-A1-2016/117697
- WO-A1-2017/051172
- CN-A- 104 050 045
- CN-A- 105 049 293
- CN-A- 105 703 927
- CN-A- 105 812 434
- US-A1- 2016 234 077
- US-A1- 2018 004 576
- ANTONIO DE DOMENICO, INFSO-ICT-317941 IJOIN, DELIVERABLE D5.3, 30 April 2015 (2015-04-30), XP055217962, Retrieved from the Internet <URL:http://cordis.europa.eu/docs/projects/cnect/1/317941/080/deliverables/001-D53.pdf> [retrieved on 20151002]

## Description

### Field of the Invention

In general, the disclosure relates to a wireless communication access network device of a system side, and more particularly, to a wireless network function virtualization method and device.

### Background of the Invention

According to the Network Function Virtualization (NFV) reference model of the European Telecommunications Standards Institute (ETSI), virtual computing resources, virtual storage resources, and virtual network resources for Guest Operating System (Guest OS) and its deployed software systems are provided by using general purpose hardware resources (general refers to general purpose processor based on X86 Architecture) including computing hardware (such as Central Processing Unit (CPU)), storage hardware (disk, disk array), and network hardware (Ethernet) etc., and using virtualization technology (such as Intel VT).

In some cases, dedicated hardware may be built into NFV reference model as virtualized or non-virtualized accelerating resources, managed and distributed by virtualization infrastructure management (VIM) using Management and Orchestration (MANO) domain in the NFV reference model. In this situation, properties of various dedication devices of radio access network are completely exposed to MANO domain, which may remarkably increase complexity of MANO domain.

Document WO 2015/187965 A1 discloses the virtualization of real-time HW resources (i.e. hardware accelerator).

### Summary of the Invention

The embodiments of the disclosure provided a wireless network function virtualization method according to claim 1.

The embodiments of the disclosure provided a wireless network function virtualization device according to claim 9

The embodiments of the disclosure further provided a computer readable medium, according to claim 13, which stores computer readable instructions, when the instructions are performed by a processor, the processor executes the wireless network function virtualization method according to the disclosure.

### Brief Description of the Drawings

Fig. 1 is a flowchart of a wireless network function virtualization method according to an embodiment of the disclosure;
Fig. 2 is a schematic view of a wireless network function virtualization device according to an embodiment of the disclosure;
Fig. 3 is an abstract schematic view of a network function virtualization of a radio access network for a dedicated hardware according to an embodiment of the disclosure;
Fig. 4 is a schematic view of virtualization network function access MANO of a radio access network for a dedicated hardware according to an embodiment of the disclosure; and
Fig. 5 is a schematic view of network function virtualization device of a radio access network for a dedicated hardware according to an embodiment of the disclosure.

### Detailed Description of the Embodiments

A wireless communication access network general includes: a Radio Resource Control (RRC) unit, a Second Layer L2 (including Packet Data Convergence Protocol (PDCP)/Radio Link Control (RLC)/Multiple Access Control (MAC)), a Physical Layer (PHY), and a Radio Frequency (RF) function unit.

Network functions of the above mentioned access network are provided by those traditional system equipment providers by using dedicated hardware. In some cases, lots of network functions of the access network have strict requirement about time delay and transferring traffic, and processing time delay may be reduced and throughput may be improved by using the dedicated hardware. In addition, a professional optimum design may be made on an Application Specific Integrated Circuits (ASIC) hardware to improve energy efficiency, and to reduce operation power consumption of hardware. Further, for a definite network function, hardware cost may be remarkably reduced by choosing an appropriated dedicated hardware. It can be seen that it may has many advantages to implement network functions by using the dedicated hardware.

In some cases, the dedicated hardware may be built in an NFV reference model as virtualized or non-virtualized accelerating resources. In the NFV reference model, Guest OS and its deployed software systems have no aware of whether the used hardware is physical or virtualized, those common network function units (for example, IP Multimedia Subsystem (IMS), Mobile Management Entity (MME), etc.) may be implemented by using the Guest OS environment, to achieve goals of saving hardware investment and improving hardware use efficiency.

However, in this situation, various dedicated hardware of the radio access network are managed and distributed by MANO domain, thus the MANO domain has high complexity.

In this regard, exemplary embodiments of the disclosure are explained in detail hereinafter in combination with the accompany drawings. It is to be noted that the following described exemplary embodiments are only used to illustrate and explain the disclosure rather than to limit the disclosure herein.

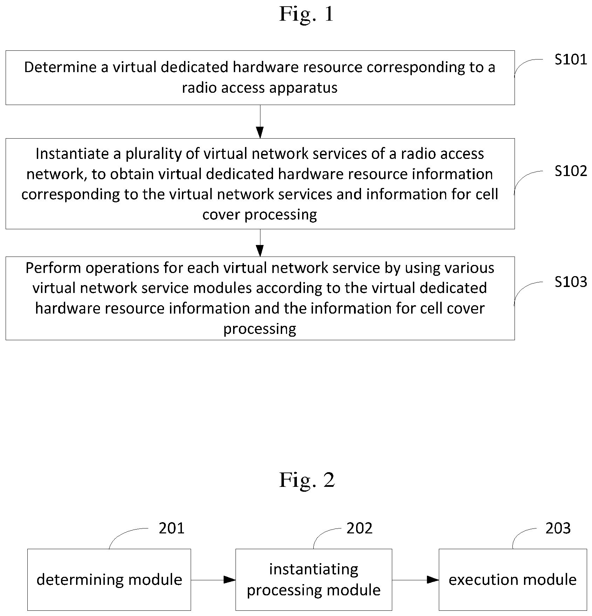

Fig. 1 is a flowchart of a wireless network function virtualization method according to an embodiment of the disclosure.

As shown in Fig. 1, the wireless network function virtualization method includes steps S 101-S 103.

In step S101, determining a virtual dedicated hardware resource corresponding to a radio access apparatus.

In step S 102, instantiating a plurality of virtual network services of a radio access network, to obtain virtual dedicated hardware resource information corresponding to the virtual network services and information for cell coverage.

In step S 103, performing operations for each virtual network service by using various virtual network service modules according to the virtual dedicated hardware resource information and the information for cell coverage.

In an embodiment, the radio access apparatus is an apparatus for virtualizing network functions of the radio access network. Herein, the step S101 of determining the virtual dedicated hardware resource corresponding to the radio access apparatus includes: determining a virtual dedicated hardware resource for virtualization corresponding to a dedicated hardware resource of the radio access apparatus.

In an embodiment, the step S101 of determining the virtual dedicated hardware resource corresponding to the radio access apparatus further includes: abstracting virtual sector resources for completing RF network function according to sector antenna entities scheduled by a dedicated hardware topology of the radio access apparatus and used attributes of antenna units and RF connection of each Radio Remote Unit (RRU), in combination with an abstract model description file of the dedicated hardware; abstracting virtual baseband processing pool resources for completing PHY network function and a part of network function of L2 according to a Baseband Processing Unit (BPU) of a baseband processing pool scheduled by the dedicated hardware topology of the radio access apparatus, in combination with the abstract model description file of the dedicated hardware; abstracting virtual general processing pool resources for completing RRC network function and a part of the network function of L2 according to a General Processing Unit (GPU) of a general processing pool topology scheduled by the dedicated hardware topology of the radio access apparatus, in combination with the abstract model description file of the dedicated hardware; and abstracting virtual connector resources for completing high speed communication function according to a sector, a BPU, a GPU, and frame type scheduled by the dedicated hardware topology of the radio access apparatus, in combination with the abstract model description file of the dedicated hardware.

In an embodiment, the step S102 of instantiating the plurality of virtual network services of the radio access network, to obtain the virtual dedicated hardware resource information corresponding to the virtual network services and the information for cell coverage includes: instantiating the plurality of virtual network services of the radio access network, by using the abstract model description file of the dedicated hardware of the radio access apparatus and a model description file of a virtual network function service, to obtain the virtual dedicated hardware resource information corresponding to the virtual network services and the information for cell coverage. The abstract model description file of the dedicated hardware may include: a dedicated hardware type number, a standardized use interface metadata, a dedicated hardware capability description information, and a version number information, and the model description file of the virtual network function service may include: a virtual network function service name, a standardized access interface definition metadata, a service capability description information, and a version number information.

In an embodiment, the step of instantiating the plurality of virtual network services of the radio access network to obtain the virtual dedicated hardware resource information corresponding to the virtual network services and the information for cell coverage includes: requiring resources to be used by the virtual network services, and returning a resource allocation result, wherein the resource allocation result includes the virtual dedicated hardware resource information corresponding to the virtual network services and the information for cell coverage.

In an embodiment, the step S103 of performing the operations for each virtual network service by using various virtual network service modules according to the virtual dedicated hardware resource information and the information for cell coverage includes: initiating a cell resource changing process by using various virtual network service modules, or initiating a cell resource releasing process by using various virtual network service modules, or initiating a failure resource self-repairing process by using various virtual network service modules.

Fig. 2 is a schematic view of a wireless network function virtualization device according to an embodiment of the disclosure.

As shown in Fig. 2, the wireless network function virtualization device includes a determining module 201, an instantiating processing module 202, and an execution module 203. The determining module 201 is configured for determining a virtual dedicated hardware resource corresponding to a radio access apparatus. The instantiating processing module 202 is configured for instantiating a plurality of virtual network services of a radio access network, to obtain virtual dedicated hardware resource information corresponding to the virtual network services and information for cell coverage. The execution module 203 is configured for performing operations for each virtual network service by using various virtual network service modules according to the virtual dedicated hardware resource information and the information for cell coverage.

In an embodiment, the radio access apparatus is an apparatus for virtualizing network functions of the radio access network. Herein, the determining module 201 is further configured for determining a virtual dedicated hardware resource for virtualization corresponding to a dedicated hardware resource of the radio access apparatus.

In an embodiment, the instantiating processing module 202 is further configured for instantiating the plurality of virtual network services of the radio access network, by using an abstract model description file of the dedicated hardware of the radio access apparatus and a model description file of a virtual network function service, to obtain the virtual dedicated hardware resource information corresponding to the virtual network services and the information for cell coverage. The abstract model description file of the dedicated hardware may include: a dedicated hardware type number, a standardized use interface metadata, a dedicated hardware capability description information, and a version number information, and the model description file of the virtual network function service may include: a virtual network function service name, a standardized access interface definition metadata, a service capability description information, and a version number information.

In an embodiment, the instantiating processing module 202 is further configured for requiring resources to be used by the virtual network services, and returning a resource allocation result, wherein the resource allocation result includes the virtual dedicated hardware resource information corresponding to the virtual network services and the information for cell coverage.

In an embodiment, the execution module 203 is further configured for initiating a cell resource changing process by using various virtual network service modules, or initiating a cell resource releasing process by using various virtual network service modules, or initiating a failure resource self-repairing process by using various virtual network service modules.

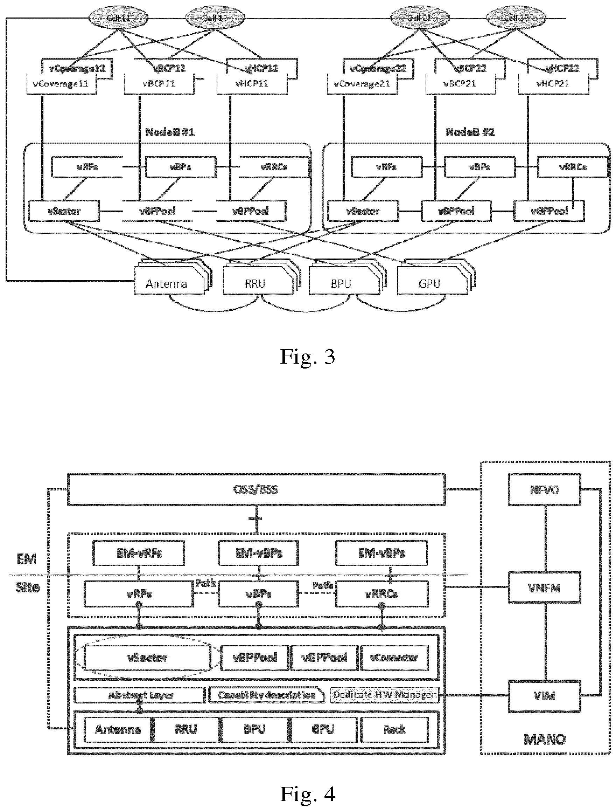

Fig. 3 is an abstract schematic view of a network function virtualization of a radio access network for a dedicated hardware according to an embodiment of the disclosure.

As shown in Fig. 3, the dedicated hardware of the radio access network apparatus of the embodiment of the disclosure includes an antenna, RRU, BPU, GPU, and a frame including a backplane of high speed communication bus. Herein, the RRU is mainly used for implementing function of RF, the BPU is mainly used for implementing function of PHY and/or a part of function of L2, the GPU is used for implementing function of RRC and/or a part of network function of L2 and operation maintenance function, and the frame is mainly used for implementing high speed communication function. The radio access network apparatus has only small amount of storage function for operation maintenance, and has no service storage function (in addition to disk, Random-Access Memory (RAM)).

In an embodiment, several antennas and several RRUs may be abstracted as virtual sector vSector resource, which provides coverage-related attribute set including power, frequency band, number of channels, etc., to implementing RF network function. A group of resources having a same vSector resource tag may use a coverage virtual connector vCoverage, and may be used directly by a cell/carrier.

In an embodiment, several BPUs may be abstracted as virtual baseband processing pool vBPPool resource, which provides baseband protocol-related attribute set including the number of users, the number of carriers, the number of channels, etc., to implementing PHY network function and a part of network function of L2. A group of baseband computing vBCP resources having a same vBPPool resource tag may be used directly by a cell/carrier.

In an embodiment, several GPU may be abstracted as virtual general processing pool vGPPool resource, which provides high-level protocol-related attribute set including the number of connected users, the number of loads, the number of cells/carriers, etc., to implementing RRC network function and a part of network function of L2. A group of high-level computing vHCP resources having a same vGPPool resource tag may be used directly by a cell/carrier.

In an embodiment, a high speed communication interface of the frame backplane may be abstracted as vConnector resource, which provides high speed communication-related attribute set including connection topology, bandwidth, time delay, priority, reliability, etc., to implementing high speed communication function. A group of communication connection path vPath resources having a same vConnector resource tag may be used directly by a cell/carrier.

The vSector, vBPPool, vGPPool, vConnector provide their standard use interfaces and capability description information, respectively, by their abstract layers of the dedicated hardware. In the abstract layers, differences of the dedicated hardware are normalized to the standard use interfaces and the capability description information. The capability description information includes resource attributes, resource framework, deployment constraints, affinity relationship, and resource capability version number.

As to managing the dedicated hardware abstract layer, an extended VIM may be linked into a MANO general platform that comply with ETSI criterion, to provide a standard management interface to an upper layer virtualization network function (VNF) manager (VNFM).

Those virtual network function services of the radio access network include: virtual Radio Resource Control (vRRC), virtual baseband processing (vBP), and virtual radio frequency (vRF). The network function service provides standardized access interface definition and service capability description information by dedicated hardware resource allocation module. The service capability description information includes requirement of type/quantity/framework of resources, affinity relationship, deployment constraints, and resource capability version number.

Fig. 4 is a schematic view of virtualization network function access MANO of a radio access network for a dedicated hardware according to an embodiment of the disclosure.

As shown in Fig. 4, in consideration of dependency relationship required between instantiation management and service of the virtual network function service, a VNFM interface may be linked to a MANO general platform that comply with ETSI criterion. In the meantime, in consideration of relationship between the dedicated hardware and the network function service instant, a VIM interface may be linked to a MANO general platform that comply with ETSI criterion, to provide a standard management interface to an upper layer Network Function Virtualization (NFV) Orchestrator (NFVO).

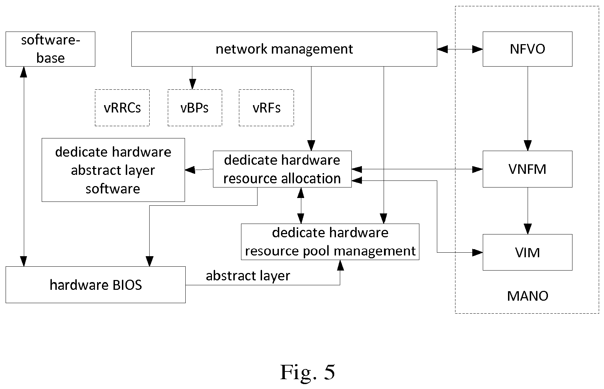

Fig. 5 is a schematic view of network function virtualization device of a radio access network for a dedicated hardware according to an embodiment of the disclosure.

As shown in Fig. 5, the Network Function Virtualization device may include a network management module, a MANO general platform, hardware BIOS, a dedicated hardware abstract layer, and a dedicated hardware manager.

The network management module is configured for initiating an instantiating process and a de-instantiating process for the MANO general platform; sending cell wireless parameters to vRRCs, vBPs, and vRFs; importing dedicated hardware scheduled data; importing abstract model description file of the dedicated hardware, and model description file of the virtual network function service.

The MANO general platform is a manage domain platform that comply with NFV reference model framework of the ETSI, and mainly includes VIM, VNFM, and NFVO.

The hardware BIOS is configured for downloading dedicated hardware abstract layer software of a specified version number and versions of the vRRCs, vBPs, and vRFs to a local cache; and receiving software version of the abstract layer of the dedicated hardware resource module and version loading instructions of the vRRCs, vBPs, and vRFs.

The dedicated hardware abstract layer is configured for providing a normalized standardized software operating environment to the virtual network functions vRRCs, vBPs, and vRFs.

The dedicated hardware manager includes a dedicated hardware resource pool management module and a dedicated hardware resource allocation module.

The dedicated hardware resource pool management module is configured for: creating, managing, and maintaining instantiating and de-instantiating statuses of the vSector, vBPPool, vGPPool, and vConnector resources, and detailed information of cell usage situation.

The dedicated hardware resource allocation module is configured for allocating vCoverage, vBPC, vHPC, and vPath to vRRC, vBP, and vRF instants appropriately when instantiating, when the cell resource changing or when the dedicated hardware being failure.

In an embodiment, the dedicated hardware-based Network Function Virtualization implementation of the radio access network may include the following steps 1-12.

In step 1, scheduling, by a user, connection relationship of dedicated hardware, Sector components (including antenna entities and used attributes of antenna units, merging and splitting attributes of RRU, and connection relationship between an antenna port and a radio frequency port of RRU), dedicated hardware scope (which may specified to a single plate, a plurality of single plates or a whole frame) included in BPPool and GPPool, physical connection relationship between RRU and the dedicated hardware, and importing the scheduled data to a dedicated hardware resource pool management module through a network management module.

In step 2, importing abstract model description files (including hardware type number, standardized use interface metadata, hardware capability description information, and version number information) of the dedicated hardware to the dedicated hardware resource pool management module through the network management module.

In step 3, importing model description files (including virtual network function service name, standardized access interface definition metadata, service capability description information and version number information) of the virtual network function service to a dedicated hardware resource allocation module through the network management module.

In step 4, powering on a dedicated hardware BIOS; the hardware BIOS finds out specification type number and physical location information, and reports them to the dedicated hardware resource pool management module; the dedicated hardware resource pool management module redraws a complete dedicated hardware topology by using the physical location information and the scheduled data. The dedicated hardware resource pool management module performs operation of abstracting as vSector, vBPPool, vGPPool, and vConnector, according to scheduled Sector, BPPool, GPPool, and the complete dedicated hardware topology, and waits for the virtual network service instantiating process.

The operation of abstracting as vSector, vBPPool, vGPPool, and vConnector can be implemented according to the following detailed description.

With regard to vSector, according to the antenna entities of the Sector of the dedicated hardware topology and used attributes of antenna units and RF connection of each RRU, in combination with the abstract model description file of the dedicated hardware, the following items are generated: vSector's labels, bands, bit maps used by uplink channels and downlink channels, detailed information of coverage locations (including SectorID and scheduled position string of the Sector); bit maps used by uplink channels and downlink channels of each RRU, carrier number Pool, carrier aggregation type; band range, power margin of each channel of each RRU. If all RRUs in the Sector support multiband, each band creates a vSector.

With regard to vBPPool, according to BPU of BPPool of the dedicated hardware topology, in combination with the abstract model description file of the dedicated hardware, label, type, format list of a minimum deployment unit (usually as small as a computing chip, such as chips of CPU, DSP, or FPGA) of vBPPool are created. The minimum deployment unit may be a virtual baseband processing unit vBPUnit.

With regard to vGPPool, according to GPU of GPPool of the dedicated hardware topology, in combination with the abstract model description file of the dedicated hardware, label, type, format list of a minimum deployment unit (usually as small as a computing chip, including RAM) of vGPPool are created. The minimum deployment unit may be a virtual central processing unit vCPU.

With regard to vConnector, according to Sector, BPU, GPU and frame type of the dedicated hardware topology, in combination with the abstract model description file of the dedicated hardware, label of vConnector, detailed information of Out-frame topology, In-frame inter-plate topology, In-board Inter-chip topology are created, wherein the detailed information includes atomic computing node (such as RRU, vBPUnit, vCPU, etc.), connection node (such as switch chip, optical port, etc.) number, transmission type (including Serial Port, Optical Port, Ethernet, etc.), transmission bandwidth.

In step 5, initiating, by a user, a virtual network service instantiating process by using an MANO general platform. The instantiating process carries the model description file version number of the virtual network function service, the abstract model description file version number of the dedicated hardware. During the instantiating process, VNFM requires, to VIM, resource to be used by services, VIM then entrusts the dedicated hardware resource allocation module to initiate a virtual network function service resource requirement, and the dedicated hardware resource allocation module returns a resource allocation result, wherein the resource allocation result includes a vGPPool resource tag used by vRRC instants, a vBPPool resource tag used by vBP instants, a vSector resource tag used by vRF instants. VIM searches the dedicated hardware resource allocation module periodically to acquire state information of vGPPool, vBPPool, and vSector.

In step 6, the dedicated hardware resource allocation module informs the hardware BIOS to download dedicated hardware abstract layer software of a specified version number and versions of vRRC, vBP, vRF from a specified software-base to a local cache.

In step 7, initiating a cell resource changing process requirement, by the network management module, to the dedicated hardware resource allocation module, or releasing the dedicated hardware resource and updating into the dedicated hardware resource pool management module. During the virtual network service instantiating process, requiring the allocation of the specific vCoverage, vBPC, vHPC, and vPath to be used by the cell may be performed by carrying wireless parameters of the cell; or without carrying the wireless parameters of the cell, and requiring or releasing the specific vCoverage, vBPC, vHPC, and vPath by using cell resource changing process in the subsequent processes, without carrying wireless parameters of the cell. VNFM searches the dedicated hardware resource allocation module periodically for the state information of vRRCs, vBPs, and vRFs.

In an embodiment, the dedicated hardware resource allocation module may perform the following detailed described operations.
1) virtual network service instantiating process or cell resource changing process carrying a cell list, the cell list includes each cell's number, format, bands, uplink and downlink frequency point, bandwidth, power, the number of connected users, the number of carriers, the number of logic ports, and cell coverage location (SectorID or Sector scheduled position string).
2) reading the cell list in a loop manner, searching the unique vSector according to each coverage location, format, bands. If the unique vSector is found, performing operation 3); and if the unique vSector is not found, recording cell number and Error a. An example of the Error a is as follow.
   Error a: coverage location not found, proceeding to a next cell.
3) allocating the uplink and downlink frequency point, bandwidth, power, and carrier number for channel of each RRU from vSector. If the allocation for channels of all RRU in vSector is succeed, it may be recorded as vCoverage and operation 4) may be performed; if not, recording cell number and Error b. An example of the Error b is as follow.
   Error b: RRU channel allocation is failed, proceeding to a next cell.
4) calculating the demanded number of CPU and vCPU and affinity requirements, the demanded number of BPU and vBPUnit and affinity requirements, according to each cell's format, bandwidth, the number of vSector channels, the number of connected users, and the number of carriers.
5) finding an Out-frame topology in the vConnector, for which an atomic computing node is RRU of the present vSector according to vCoverage, to find an available BPU list. If the available BPU list is found, performing operations 7) and 8). If the available BPU list is null or the number of BPUs is less than the number of BPUs demanded by the cell, performing operation 6).
6) if an In-frame inter-board switching connection is existed, finding an Out-frame topology and an In-frame inter-plate topology in the vConnector, for which an atomic computing node is RRU of the present vSector according to vCoverage, to find an available BPU list. If the available BPU list is found, performing operations 7) and 9). If the available BPU list is null, or if the available BPU list is not null but the number of BPUs is less than the number of BPUs demanded by the cell, or if the available BPU list is not null but the number of BPUs is larger than or equal to the number of BPUs demanded by the cell and the remain number of vBPUnits is less than the number of vBPUnits demanded by the cell, recording the cell number and Error c. An example of the Error c is as follow.
   Error c: BP resource allocation is failed, proceeding to a next cell.
7) selecting BPU according to a strategy. When the strategy is load balancing, selecting several BPUs which have the lightest load from the available BPU list, and when the strategy is resource conserving, selecting several BPUs which have the heaviest load and free resource.
8) calculating required path bandwidth according to a service bandwidth of vCoverage and the number of channels of each RRU, finding several paths vPaths of sufficient bandwidth and an available vBPUnit for each RRU from the Out-frame topology and the In-board Inter-chip topology, to group into a vBPUnit group vBPUnitGroup. If the bandwidth is not sufficient, excluding the present BPU from the available BPU list, and re-performing the operation 7), until the available BPU list is null or the number of BPUs is less than the number of BPUs demanded by the cell. When the available BPU list is null or the number of BPUs is less than the number of BPUs demanded by the cell, recording the cell number and Error d. An example of the Error d is as follow.
   Error d: no available BPU connection path, proceeding to a next cell.
9) calculating required path bandwidth according to a service bandwidth of vCoverage and the number of channels of each RRU, finding a path vPath of sufficient bandwidth and an available vBPUnit for each RRU from the Out-frame topology, the In-frame interplate topology, and the In-board Inter-chip topology, to group into vBPUnitGroup. If the bandwidth is not sufficient, excluding the present BPU from the available BPU list, and re-performing the operation 7), until the available BPU list is null or the number of BPUs is less than the number of BPUs demanded by the cell. When the available BPU list is null or the number of BPUs is less than the number of BPUs demanded by the cell, recording the cell number and Error d. An example of the Error d is as follow.
   Error d: no available BPU connection path, proceeding to a next cell.
10) allocating a vBPC to the present Cell from the vBPUnitGroup, and marking usage situation of every vBPUnit.
11) finding an available GPU list according to the In-frame inter-plate topology or Inter-frame topology of BPU and GPU, in combination with the present selected BPU. When the available GPU list is null, or the available GPU list is not null but the number of GPUs is less than the number of GPUs demanded by the cell, or the available GPU list is not null but the number of GPUs is larger than or equal to the number of GPUs demanded by the cell and the remain number of vCPUs is less than the number of vCPUs demanded by the cell, recording the cell number and Error e. An example of the Error e is as follow.
   Error e: GP resource allocation is failed, proceeding to a next cell.
12) selecting GPU according to a strategy. When the strategy is load balancing, selecting several GPUs which have the lightest load from the available GPU list, and when the strategy is time delay first, selecting several GPUs which have the minimum link time delay from the available GPU list. The vCPU is allocated according to vCPU requirement of the cell, and is marked as vHPC.
13) allocating connections for BPU and GPU according to the service bandwidth of the cell, and recording them to the vPath of the cell. When the connection bandwidths of the BPU and GPU are less than the service bandwidth, deleting the present GPU from the GPU list, re-performing operation 12), until the available GPU list is null or the number of the GPU is less than the number of GPU demanded by the cell. When the GPU list is null or the number of the GPU is less than the number of GPU demanded by the cell, recording the cell number and Error f. An example of the Error f is as follow.

Error f: no available GPU connection path, proceeding to a next cell.

In step 8, informing, by the dedicated hardware resource allocation module, that the hardware BIOS is loaded an abstract layer software version and versions of vRRC, vBP, vRF, by the dedicated hardware used by the vCoverage, vBPC, and vHPC.

In step 9, informing, by the dedicated hardware resource allocation module, the detailed parameters of the dedicated hardware abstract layer software vCoverage, vBPC, vHPC, and vPath, wherein the main parameters of the vCoverage include the cell's number, bandwidth, channel power, band frequency point, carrier number, etc., the main parameters of the vBPC include the cell's number, bandwidth, logic port number, power, and the number of connected users, etc., the main parameters of the vHPC include the cell's number, bandwidth, and the number of connected users, etc., and the main parameters of the vPath include high speed communication path, bandwidth, time delay, priority, and reliability, etc. between the vCoverage, vBPC, and vHPC.

In step 10, distributing, by the network management module, wireless service parameters to the vRRCs, vBPs, vRFs, to initiate a cell initialization process.

Step 11 is a cell resource releasing process. During the process, in the cell resource changing process initiated by the network manager, the dedicated hardware resource allocation module may be informed to release specific vCoverage, vBPC, vHPC, and vPath used by a certain cell, and the situation is updated into the dedicated hardware resource pool management module.

Step 12 is a failure resource self-repairing process. During the process, when it is detected, by the hardware BIOS, that a certain dedicated hardware is failed and unavailable, the dedicated hardware resource pool management module analyze the serving cell affected by the failure, and the dedicated hardware resource allocation module is informed to re-allocate vCoverage, vBPC, vHPC, and vPath to the affected serving cell.

Although it is not illustrated in the accompany drawings, the disclosure also provided a computer readable medium, which stores computer readable instructions, when the instructions are performed by a processor, it executes the wireless network function virtualization method of the disclosure.

Through the various embodiments and technical solution mentioned above, in the NFV reference model frame, VNF instants and static or dynamic mapping of the dedicated hardware resource pool are provided for the MANO domain of the NFV, the process of managing and distributing the dedicated resources used by the service is accomplished in sites. Therefore, various dedicated hardware of the radio access network is managed and distributed through the MANO domain, resolving the problem of high complexity of the MANO domain.

Therefore, through the various embodiments and technical solution mentioned above, advantages of using dedicated hardware may be obtained in the NFV situation. The advantages include, for example, with regard to the service provider, the operating environment of the virtualization may be flexibly adjusted according to software requirements, use efficiency of hardware is substantially improved, the business model of traditional system equipment providers of software and hardware bundling sale is changed, such that a large number of software developers may participate, software investment and its risk are greatly reduced, at the same time, the cost of system integration is reduced and the level of automatic operation and maintenance is improved by using the standardized MANO domain manage platform; with regard to the equipment provider, development costs may be reduced, impact on the software system by hardware update is reduced, and the time-to-market for products is reduced.

While the disclosure has been described in detail, the disclosure is not limited thereto. The invention is specified by the appended claims.

## Claims

1. A wireless network function virtualization method, comprising the steps of:
determining (S101), by a wireless network function virtualization device, a virtual dedicated hardware resource corresponding to a radio access apparatus, wherein the wireless network function virtualization device comprises a network management module, a management and orchestration, called MANO, general platform, hardware basic input output system, called BIOS, a dedicated hardware abstract layer, and a dedicated hardware manager comprising a dedicated hardware resource pool management module and a dedicated hardware resource allocation module, the virtual dedicated hardware resource is resource abstracted by the dedicated hardware resource pool management module according to dedicated hardware resource;
instantiating (S102), by the wireless network function virtualization device, a plurality of virtual network services of a radio access network, to obtain virtual dedicated hardware resource information corresponding to the virtual network services and information for cell coverage, wherein the radio access apparatus is an apparatus for virtualizing network functions of the radio access network; and
performing (S103), by the wireless network function virtualization device, operations for each virtual network service by using various virtual network service modules according to the virtual dedicated hardware resource information and the information for cell coverage,
wherein the step of instantiating (S102) the plurality of virtual network services of the radio access network, to obtain the virtual dedicated hardware resource information corresponding to the virtual network services and the information for cell coverage comprises:
instantiating the plurality of virtual network services of the radio access network, by using an abstract model description file of the dedicated hardware of the radio access apparatus and a model description file of a virtual network function service, to obtain the virtual dedicated hardware resource information corresponding to the virtual network services and the information for cell coverage.

2. The method of claim 1, wherein the step of determining (S101) the virtual dedicated hardware resource corresponding to the radio access apparatus comprises:
abstracting virtual sector resources for completing Radio Frequency, abbreviated as RF, network function according to sector antenna entities scheduled by a dedicated hardware topology of the radio access apparatus and used attributes of antenna units and RF connection of each Radio Remote Unit, abbreviated as RRU, in combination with an abstract model description file of the dedicated hardware.

3. The method of claim 1, wherein the step of determining (S101) the virtual dedicated hardware resource corresponding to the radio access apparatus comprises:
abstracting virtual baseband processing pool resources for completing Physical Layer, abbreviated as PHY, network function and a part of network function of Second Layer L2 according to a Baseband Processing Unit, abbreviated as BPU, of a baseband processing pool scheduled by a dedicated hardware topology of the radio access apparatus, in combination with an abstract model description file of the dedicated hardware.

4. The method of claim 1, wherein the step of determining (S101) the virtual dedicated hardware resource corresponding to the radio access apparatus comprises:
abstracting virtual general processing pool resources for completing Radio Resource Control, abbreviated as RRC, network function and a part of the network function of Second Layer L2 according to a General Processing Unit, abbreviated as GPU, of a general processing pool scheduled by a dedicated hardware topology of the radio access apparatus, in combination with an abstract model description file of the dedicated hardware.

5. The method of claim 1, wherein the step of determining (S101) the virtual dedicated hardware resource corresponding to the radio access apparatus comprises:
abstracting virtual connector resources for completing high speed communication function according to a sector, a BPU, a GPU, and frame type scheduled by a dedicated hardware topology of the radio access apparatus, in combination with an abstract model description file of the dedicated hardware.

6. The method of claim 1, wherein the radio access apparatus is an apparatus for virtualizing network functions of the radio access network, and wherein, the step of determining (S101) the virtual dedicated hardware resource corresponding to the radio access apparatus comprises:
determining a virtual dedicated hardware resource for virtualization corresponding to a dedicated hardware resource of the radio access apparatus.

7. The method of claim 1, wherein the step of instantiating the plurality of virtual network services of the radio access network, to obtain the virtual dedicated hardware resource information corresponding to the virtual network services and the information for cell coverage comprises:
requiring resources to be used by the virtual network services, and returning a resource allocation result, wherein the resource allocation result comprises the virtual dedicated hardware resource information corresponding to the virtual network services and the information for cell coverage.

8. The method of claim 1, wherein the step of performing (S103) the operations for each virtual network service by using various virtual network service modules according to the virtual dedicated hardware resource information and the information for cell coverage comprises:
initiating a cell resource changing process by using various virtual network service modules, or
initiating a cell resource releasing process by using various virtual network service modules, or
initiating a failure resource self-repairing process by using various virtual network service modules.

9. A wireless network function virtualization device, comprising:
a network management module, a management and orchestration, called MANO, general platform, hardware basic input output system, called BIOS, a dedicated hardware abstract layer, a dedicated hardware manager comprising a dedicated hardware resource pool management module and a dedicated hardware resource allocation module,
a determining module (201) configured for determining a virtual dedicated hardware resource corresponding to a radio access apparatus, wherein the virtual dedicated hardware resource is resource abstracted by the dedicated hardware resource pool management module according to dedicated hardware resource;
an instantiating processing module (202) configured for instantiating a plurality of virtual network services of a radio access network, to obtain virtual dedicated hardware resource information corresponding to the virtual network services and information for cell coverage, wherein the radio access apparatus is an apparatus for virtualizing network functions of the radio access network; and
an execution module (203) configured for performing operations for each virtual network service by using various virtual network service modules according to the virtual dedicated hardware resource information and the information for cell coverage,
wherein the instantiating processing module (202) is further configured for:
instantiating the plurality of virtual network services of the radio access network, by using an abstract model description file of the dedicated hardware of the radio access apparatus and a model description file of a virtual network function service, to obtain the virtual dedicated hardware resource information corresponding to the virtual network services and the information for cell coverage.

10. The device of claim 9, wherein the radio access apparatus is an apparatus for virtualizing network functions of the radio access network, and wherein, the determining module (201) is further configured for determining a virtual dedicated hardware resource for virtualization corresponding to a dedicated hardware resource of the radio access apparatus.

11. The device of claim 9, wherein the instantiating processing module (202) is further configured for:
requiring resources to be used by the virtual network services, and returning a resource allocation result, wherein the resource allocation result comprises the virtual dedicated hardware resource information corresponding to the virtual network services and the information for cell coverage.

12. The device of claim 9, wherein the execution module (203) is further configured for:
initiating a cell resource changing process by using various virtual network service modules, or
initiating a cell resource releasing process by using various virtual network service modules, or
initiating a failure resource self-repairing process by using various virtual network service modules.

13. A computer readable medium, which stores computer readable instructions, when the instructions are performed by a processor, the processor executes the wireless network function virtualization method of any one of claims 1-8.

## Patentansprüche

1. Drahtlosnetzfunktion-Virtualisierungsverfahren, umfassend die folgenden Schritte:
Bestimmen (S101), durch eine Drahtlosnetzfunktion-Virtualisierungsvorrichtung, einer virtuellen dedizierten Hardwareressource, die einem Funkzugangsgerät entspricht, die Drahtlosnetzfunktion-Virtualisierungsvorrichtung umfassend ein Netzverwaltungsmodul, eine allgemeine Plattform für Management- und Orchestrierung, bezeichnet als MANO, ein Hardware-Eingabe-Ausgabe-Basissystem, bezeichnet als BIOS, eine dedizierte Hardware-Abstraktionsschicht und einen dedizierten Hardwaremanager, umfassend ein dediziertes Hardwareressourcenpool-Managementmodul und ein dediziertes Hardwareressourcen-Zuweisungsmodul, wobei die virtuelle dedizierte Hardwareressource durch das dedizierte Hardwareressourcenpool-Managementmodul gemäß der dedizierten Hardwareressource abstrahiert wird;
Instanziieren (S102), durch die Drahtlosnetzfunktion-Virtualisierungsvorrichtung, einer Vielzahl von virtuellen Netzdiensten eines Funkzugangsnetzes, um Informationen über virtuelle dedizierte Hardwareressourcen entsprechend den virtuellen Netzdiensten und Informationen über Zellenabdeckung zu erlangen, wobei das Funkzugangsgerät ein Gerät zum Virtualisieren von Netzfunktionen des Funkzugangsnetzes ist; und
Durchführen (S103), durch die Drahtlosnetzfunktion-Virtualisierungsvorrichtung, von Operationen für jeden virtuellen Netzdienst unter Verwendung verschiedener virtueller Netzdienstmodule gemäß den Informationen über virtuelle dedizierte Hardwareressourcen und den Informationen über Zellenabdeckung,
wobei der Schritt eines Instanziierens (S102) der Vielzahl von virtuellen Netzdiensten des Funkzugangsnetzes, um die Informationen über virtuelle dedizierte Hardwareressourcen entsprechend den virtuellen Netzdiensten und die Informationen über Zellenabdeckung zu erlangen, Folgendes umfasst:
Instanziieren der Vielzahl von virtuellen Netzdiensten des Funkzugangsnetzes unter Verwendung einer abstrakten Modellbeschreibungsdatei der dedizierten Hardware des Funkzugangsgerät und einer Modellbeschreibungsdatei eines virtuellen Netzfunktionsdienstes, um die den virtuellen Netzdiensten entsprechenden Informationen über virtuelle dedizierte Hardwareressourcen und die Informationen über Zellenabdeckung zu erlangen.

2. Verfahren nach Anspruch 1, wobei der Schritt eines Bestimmens (S101) der virtuellen dedizierten Hardwareressource, die dem Funkzugangsgerät entspricht, Folgendes umfasst:
Abstrahieren von virtuellen Sektorressourcen zum Vervollständigen einer Netzfunktion in Hochfrequenz, abgekürzt HF, gemäß Sektorantenneneinheiten, die durch eine dedizierte Hardwaretopologie des Funkzugangsgerät geplant sind, und verwendeten Attributen von Antenneneinheiten und HF-Verbindungen jeder Funkferneinheit, abgekürzt BPU, in Kombination mit einer abstrakten Modellbeschreibungsdatei der dedizierten Hardware.

3. Verfahren nach Anspruch 1, wobei der Schritt eines Bestimmens (S101) der virtuellen dedizierten Hardwareressource, die dem Funkzugangsgerät entspricht, Folgendes umfasst:
Abstrahieren von Ressourcen eines virtuellen Basisbandverarbeitungspools zum Vervollständigung einer Netzfunktion einer physikalischen Schicht, abgekürzt PHY, und eines Teils einer Netzfunktion einer zweiten Schicht L2 entsprechend einer Basisbandverarbeitungseinheit, abgekürzt BPU, eines Basisbandverarbeitungspools, der von einer dedizierten Hardwaretopologie des Funkzugangsgeräts geplant wird, in Kombination mit einer abstrakten Modellbeschreibungsdatei der dedizierten Hardware.

4. Verfahren nach Anspruch 1, wobei der Schritt eines Bestimmens (S101) der virtuellen dedizierten Hardwareressource, die dem Funkzugangsgerät entspricht, Folgendes umfasst:
Abstrahieren virtueller allgemeiner Verarbeitungspoolressourcen zum Vervollständigen der Netzfunktion für Funkressourcensteuerung, abgekürzt RRC, und eines Teils der Netzfunktion der zweiten Schicht L2 gemäß einer allgemeinen Verarbeitungseinheit, abgekürzt GPU, eines allgemeinen Verarbeitungspools, der durch eine dedizierte Hardwaretopologie des Funkzugangsgeräts geplant ist, in Kombination mit einer abstrakten Modellbeschreibungsdatei der dedizierten Hardware.

5. Verfahren nach Anspruch 1, wobei der Schritt eines Bestimmens (S101) der virtuellen dedizierten Hardwareressource, die dem Funkzugangsgerät entspricht, Folgendes umfasst:
Abstrahieren von virtuellen Verbindungsressourcen zum Vervollständigen einer Hochgeschwindigkeitskommunikationsfunktion gemäß einem Sektor, einer BPU, einer GPU und einem Rahmentyp, der durch eine dedizierte Hardwaretopologie des Funkzugangsgeräts geplant ist, in Kombination mit einer abstrakten Modellbeschreibungsdatei der dedizierten Hardware.

6. Verfahren nach Anspruch 1, wobei das Funkzugangsgerät ein Gerät zum Virtualisieren von Netzfunktionen des Funkzugangsnetzes ist, und wobei der Schritt eines Bestimmens (S101) der virtuellen dedizierten Hardwareressource entsprechend des Funkzugangsgeräts Folgendes umfasst:
Bestimmen einer virtuellen dedizierten Hardwareressource zum Virtualisieren entsprechend einer dedizierten Hardwareressource des Funkzugangsgeräts.

7. Verfahren nach Anspruch 1, wobei der Schritt eines Instanziierens der Vielzahl von virtuellen Netzdiensten des Funkzugangsnetzes, um die Informationen über virtuelle dedizierte Hardwareressourcen entsprechend den virtuellen Netzdiensten und die Informationen über Zellenabdeckung zu erlangen, Folgendes umfasst:
Anfordern von Ressourcen, die von den virtuellen Netzdiensten verwendet werden sollen, und Zurückgeben eines Ressourcenzuweisungsresultats, wobei das Ressourcenzuweisungsresultat die Informationen über virtuelle dedizierte Hardwareressourcen entsprechend den virtuellen Netzdiensten und die Informationen über Zellenabdeckung umfasst.

8. Verfahren nach Anspruch 1, wobei der Schritt eines Durchführens (S103) der Operationen für jeden virtuellen Netzdienst unter Verwendung verschiedener virtueller Netzdienstmodule gemäß den Informationen über virtuelle dedizierte Hardwareressourcen und den Informationen über Zellenabdeckung Folgendes umfasst:
Einleiten eines Zellressourcen-Wechselprozesses unter Verwendung verschiedener virtueller Netzdienstmodule, oder
Einleiten eines Zellressourcen-Freigabeprozesses unter Verwendung verschiedener virtueller Netzdienstmodule, oder
Einleiten eines Ausfallressourcen-Selbstreparaturprozesses unter Verwendung verschiedener virtueller Netzdienstmodule.

9. Drahtlosnetzfunktion-Virtualisierungsvorrichtung, umfassend:
ein Netzverwaltungsmodul, eine allgemeine Plattform für Management- und Orchestrierung, bezeichnet als MANO, ein Hardware-Eingabe-Ausgabe-Basissystem, bezeichnet als BIOS, eine dedizierte Hardware-Abstraktionsschicht, einen dedizierten Hardwaremanager, umfassend ein dediziertes Hardwareressourcenpool-Managementmodul und ein dediziertes Hardwareressourcen-Zuweisungsmodul,
ein Bestimmungsmodul (201), das zum Bestimmen einer virtuellen dedizierten Hardwareressource entsprechend einem Funkzugangsgerät konfiguriert ist, wobei die virtuelle dedizierte Hardwareressource eine Ressource ist, die durch das Poolmanagementmodul für dedizierte Hardwareressourcen gemäß der dedizierten Hardwareressource abstrahiert wird;
ein Instanziierungsverarbeitungsmodul (202), das zum Instanziieren einer Vielzahl von virtuellen Netzdiensten eines Funkzugangsnetzes konfiguriert ist, um Informationen über virtuelle dedizierte Hardwareressourcenentsprechend den virtuellen Netzdiensten und Informationen über Zellenabdeckung zu erlangen, wobei das Funkzugangsgerät ein Gerät zum Virtualisieren von Netzfunktionen des Funkzugangsnetzes ist; und
ein Ausführungsmodul (203), das konfiguriert ist, um für jeden virtuellen Netzdienst unter Verwendung verschiedener virtueller Netzdienstmodule gemäß den Informationen über virtuelle dedizierte Hardwareressourcen und Informationen über Zellenabdeckung Operationen durchzuführen,
wobei das Instanziierungsverarbeitungsmodul (202) ferner zu Folgendem konfiguriert ist:
Instanziieren der Vielzahl von virtuellen Netzdiensten des Funkzugangsnetzes unter Verwendung einer abstrakten Modellbeschreibungsdatei der dedizierten Hardware des Funkzugangsgerät und einer Modellbeschreibungsdatei eines virtuellen Netzfunktionsdienstes, um die den virtuellen Netzdiensten entsprechenden Informationen über virtuelle dedizierte Hardwareressourcen und die Informationen über Zellenabdeckung zu erlangen.

10. Vorrichtung nach Anspruch 9, wobei das Funkzugangsgerät ein Gerät zum Virtualisieren von Netzfunktionen des Funkzugangsnetzes ist, und wobei das Bestimmungsmodul (201) ferner zum Bestimmen einer virtuellen dedizierten Hardwareressource zum Virtualisieren entsprechend einer dedizierten Hardwareressource des Funkzugangsgeräts konfiguriert ist.

11. Vorrichtung nach Anspruch 9, wobei das Instanziierungsverarbeitungsmodul (202) ferner zu Folgendem konfiguriert ist:
Anfordern von Ressourcen, die von den virtuellen Netzdiensten verwendet werden sollen, und Zurückgeben eines Ressourcenzuweisungsresultats, wobei das Ressourcenzuweisungsresultat die Informationen über virtuelle dedizierte Hardwareressourcen entsprechend den virtuellen Netzdiensten und die Informationen über Zellenabdeckung umfasst.

12. Vorrichtung nach Anspruch 9, wobei das Ausführungsmodul (203) ferner zu Folgendem konfiguriert ist:
Einleiten eines Zellressourcen-Wechselprozesses unter Verwendung verschiedener virtueller Netzdienstmodule, oder
Einleiten eines Zellressourcen-Freigabeprozesses unter Verwendung verschiedener virtueller Netzdienstmodule, oder
Einleiten eines Ausfallressourcen-Selbstreparaturprozesses unter Verwendung verschiedener virtueller Netzdienstmodule.

13. Computerlesbares Medium, das computerlesbare Anweisungen speichert, wobei der Prozessor, wenn die Anweisungen von einem Prozessor ausgeführt werden, das Drahtlosnetzfunktion-Virtualisierungsverfahren nach einem der Ansprüche 1-8 ausführt.

## Revendications

1. Procédé de virtualisation de fonctions de réseau sans fil, comprenant les étapes ci-dessous consistant à :
déterminer (S101), par le biais d'un dispositif de virtualisation de fonctions de réseau sans fil, une ressource de matériel dédié virtuel correspondant à un appareil d'accès radio, dans lequel le dispositif de virtualisation de fonctions de réseau sans fil comprend un module de gestion de réseau, une plateforme générale de gestion et d'orchestration, appelée MANO, un système d'entrée-sortie de base de matériel, appelé BIOS, une couche abstraite de matériel dédié, et un gestionnaire de matériel dédié comprenant un module de gestion de pool de ressources de matériel dédié et un module d'allocation de ressources de matériel dédié, dans laquelle la ressource de matériel dédié virtuel est une ressource abstraite par le module de gestion de pool de ressources de matériel dédié selon la ressource de matériel dédié ;
instancier (S102), par le biais du dispositif de virtualisation de fonctions de réseau sans fil, une pluralité de services de réseau virtuel d'un réseau d'accès radio, en vue d'obtenir des informations de ressources de matériel dédié virtuel correspondant aux services de réseau virtuel et des informations relatives à la couverture cellulaire, dans lequel l'appareil d'accès radio est un appareil destiné à virtualiser des fonctions de réseau du réseau d'accès radio ; et
mettre en oeuvre (S103), par le biais du dispositif de virtualisation de fonctions de réseau sans fil, des opérations, pour chaque service de réseau virtuel, en utilisant divers modules de service de réseau virtuel selon les informations de ressources de matériel dédié virtuel et les informations relatives à la couverture cellulaire ;
dans laquelle l'étape consistant à instancier (S102) la pluralité de services de réseau virtuel du réseau d'accès radio, en vue d'obtenir les informations de ressources de matériel dédié virtuel correspondant aux services de réseau virtuel et les informations relatives à la couverture cellulaire, consiste à :
instancier la pluralité de services de réseau virtuel du réseau d'accès radio, en utilisant un fichier de description de modèle abstrait du matériel dédié de l'appareil d'accès radio et un fichier de description de modèle d'un service de fonction de réseau virtuel, en vue d'obtenir les informations de ressources de matériel dédié virtuel correspondant aux services de réseau virtuel et les informations relatives à la couverture cellulaire.

2. Procédé selon la revendication 1, dans lequel l'étape de détermination (S101) de la ressource de matériel dédié virtuel correspondant à l'appareil d'accès radio comprend l'étape ci-dessous consistant à :
abstraire des ressources de secteur virtuel pour compléter une fonction de réseau radiofréquence, RF en abrégé, selon des entités d'antenne de secteur planifiées par une topologie de matériel dédié de l'appareil d'accès radio et des attributs utilisés d'unités d'antenne et d'une connexion RF de chaque unité distante radio, RRU en abrégé, en combinaison avec un fichier de description de modèle abstrait du matériel dédié.

3. Procédé selon la revendication 1, dans lequel l'étape de détermination (S101) de la ressource de matériel dédié virtuel correspondant à l'appareil d'accès radio comprend l'étape ci-dessous consistant à :
abstraire des ressources de pool de traitement de bande de base virtuelles pour compléter une fonction de réseau de couche physique, PHY en abrégé, et une partie d'une fonction de réseau de deuxième couche L2, selon une unité de traitement de bande de base, BPU en abrégé, d'un pool de traitement de bande de base planifié par une topologie de matériel dédié de l'appareil d'accès radio, en combinaison avec un fichier de description de modèle abstrait du matériel dédié.

4. Procédé selon la revendication 1, dans lequel l'étape de détermination (S101) de la ressource de matériel dédié virtuel correspondant à l'appareil d'accès radio comprend l'étape ci-dessous consistant à :
abstraire des ressources de pool de traitement général virtuelles pour compléter une fonction de réseau de commande de ressources radio, RRC en abrégé, et une partie de la fonction de réseau de deuxième couche L2 selon une unité de traitement général, GPU en abrégé, d'un pool de traitement général planifié par une topologie de matériel dédié de l'appareil d'accès radio, en combinaison avec un fichier de description de modèle abstrait du matériel dédié.

5. Procédé selon la revendication 1, dans lequel l'étape de détermination (S101) de la ressource de matériel dédié virtuel correspondant à l'appareil d'accès radio comprend l'étape ci-dessous consistant à :
abstraire des ressources de connecteur virtuel pour compléter une fonction de communication à haut débit selon un secteur, une unité BPU, une unité GPU et un type de trame planifiés par une topologie de matériel dédié de l'appareil d'accès radio, en combinaison avec un fichier de description de modèle abstrait du matériel dédié.

6. Procédé selon la revendication 1, dans lequel l'appareil d'accès radio est un appareil destiné à virtualiser des fonctions de réseau du réseau d'accès radio, et dans lequel l'étape de détermination (S101) de la ressource de matériel dédié virtuel correspondant à l'appareil d'accès radio comprend l'étape ci-dessous consistant à :
déterminer une ressource de matériel dédié virtuel pour la virtualisation correspondant à une ressource de matériel dédié de l'appareil d'accès radio.

7. Procédé selon la revendication 1, dans lequel l'étape consistant à instancier la pluralité de services de réseau virtuel du réseau d'accès radio en vue d'obtenir les informations de ressources de matériel dédié virtuel correspondant aux services de réseau virtuel et les informations relatives à la couverture cellulaire comprend les étapes ci-dessous consistant à :
demander des ressources devant être utilisées par les services de réseau virtuel, et renvoyer un résultat d'allocation de ressources, dans lequel le résultat d'allocation de ressources comprend les informations de ressources de matériel dédié virtuel correspondant aux services de réseau virtuel et les informations relatives à la couverture cellulaire.

8. Procédé selon la revendication 1, dans lequel l'étape consistant à mettre en oeuvre (S103) les opérations, pour chaque service de réseau virtuel, en utilisant divers modules de service de réseau virtuel selon les informations de ressources de matériel dédié virtuel et les informations relatives à la couverture cellulaire comprend les étapes ci-dessous consistant à :
initier un processus de changement de ressources cellulaires en faisant appel à divers modules de service de réseau virtuel ; ou
initier un processus de libération de ressources cellulaires en faisant appel à divers modules de service de réseau virtuel ; ou
initier un processus d'autoréparation de ressources défaillantes en faisant appel à divers modules de service de réseau virtuel.

9. Dispositif de virtualisation de fonctions de réseau sans fil, comprenant :
un module de gestion de réseau, une plateforme générale de gestion et d'orchestration, appelée MANO, un système d'entrée-sortie de base de matériel, appelé BIOS, une couche abstraite de matériel dédié, un gestionnaire de matériel dédié comprenant un module de gestion de pool de ressources de matériel dédié et un module d'allocation de ressources de matériel dédié,
un module de détermination (201) configuré de manière à déterminer une ressource de matériel dédié virtuel correspondant à un appareil d'accès radio, dans laquelle la ressource de matériel dédié virtuel est une ressource abstraite par le module de gestion de pool de ressources de matériel dédié selon la ressource de matériel dédié ;
un module de traitement d'instanciation (202) configuré de manière à instancier une pluralité de services de réseau virtuel d'un réseau d'accès radio, en vue d'obtenir des informations de ressources de matériel dédié virtuel correspondant aux services de réseau virtuel et des informations relatives à la couverture cellulaire, dans lequel l'appareil d'accès radio est un appareil destiné à virtualiser des fonctions de réseau du réseau d'accès radio ; et
un module d'exécution (203) configuré de manière à mettre en oeuvre des opérations, pour chaque service de réseau virtuel, en utilisant divers modules de service de réseau virtuel selon les informations de ressources de matériel dédié virtuel et les informations relatives à la couverture cellulaire ;
dans lequel le module de traitement d'instanciation (202) est en outre configuré de manière à :
instancier la pluralité de services de réseau virtuel du réseau d'accès radio, en utilisant un fichier de description de modèle abstrait du matériel dédié de l'appareil d'accès radio et un fichier de description de modèle d'un service de fonction de réseau virtuel, en vue d'obtenir les informations de ressources de matériel dédié virtuel correspondant aux services de réseau virtuel et les informations relatives à la couverture cellulaire.

10. Dispositif selon la revendication 9, dans lequel l'appareil d'accès radio est un appareil destiné à virtualiser des fonctions de réseau du réseau d'accès radio, et dans lequel le module de détermination (201) est en outre configuré de manière à déterminer une ressource de matériel dédié virtuel pour la virtualisation correspondant à une ressource de matériel dédié de l'appareil d'accès radio.

11. Dispositif selon la revendication 9, dans lequel le module de traitement d'instanciation (202) est en outre configuré de manière à :
demander des ressources devant être utilisées par les services de réseau virtuel, et renvoyer un résultat d'allocation de ressources, dans lequel le résultat d'allocation de ressources comprend les informations de ressources de matériel dédié virtuel correspondant aux services de réseau virtuel et les informations relatives à la couverture cellulaire.

12. Dispositif selon la revendication 9, dans lequel le module d'exécution (203) est en outre configuré de manière à :
initier un processus de changement de ressources cellulaires en faisant appel à divers modules de service de réseau virtuel ; ou
initier un processus de libération de ressources cellulaires en faisant appel à divers modules de service de réseau virtuel ; ou
initier un processus d'autoréparation de ressources défaillantes en faisant appel à divers modules de service de réseau virtuel.

13. Support lisible par ordinateur, lequel stocke des instructions lisibles par ordinateur, dans lesquelles, lorsque les instructions sont exécutées par un processeur, le processeur exécute le procédé de virtualisation de fonctions de réseau sans fil selon l'une quelconque des revendications 1 à 8.
